# EUROPEAN PATENT SPECIFICATION

(11) **EP 2 852 031 B1**
(45) Date of publication and mention of the grant of the patent: **13.01.2021**
(21) Application number: 13185451.5
(22) Date of filing: 20.09.2013
(51) Int. Cl.: H02K 1/27, H02K 1/30, H02K 5/167

(54) **Rotor for brushless DC motor and brushless DC motor**
Rotor für einen bürstenlosen Gleichstrommotor und bürstenloser Gleichstrommotor
Rotor pour moteur à courant continu sans balais et moteur à courant continu sans balai

(43) Date of publication of application: 25.03.2015
(73) Proprietor: Bleckmann GmbH & Co. KG, 5112 Lamprechtshausen (AT)
(72) Inventor: Teufl, Gernot, 5400 Hallein (AT); Pleschinger, Andreas, 5205 Schleedorf (AT)
(74) Representative: Eisenführ Speiser

(56) References cited:
- EP-A1- 0 438 334
- EP-A1- 0 579 560
- EP-A1- 1 719 916
- EP-A1- 2 209 184
- DE-A1-102011 005 713
- DE-U1-202011 100 921

## Description

The present invention relates to the field of brushless direct current electric motors, called BLDC motors, in particular for use in wet-running circulation pumps of home appliances, for example. In particular, the invention relates to a rotor unit for such a BLDC motor according to the preamble of independent claim 1.

### Technological Background

EP 1 841 041 A1 shows a BLDC motor for use in wet-running pumps. The BLDC motor has a permanently excited rotor which comprises a plastic connection between a reflux base and a rotor shaft. The plastic connection is formed by injection molding and provides for a fixed and watertight attachment of the reflux base to the rotor shaft. Furthermore, permanent magnets are attached to the reflux base via another plastic connection. Both plastic connections may be formed in the same injection molding process. Additionally, the rotor is provided with an injection molded plastic sheath enclosing the whole rotor and fixing the permanent magnets so that a moisture resistant and fluid resistant rotor for wet-running pumps is formed. The permanent magnets of such rotors are rare-earth magnets, for example neodymium iron boron (NdFeB) magnets, exhibiting a high magnetic remanence (usually more than 1.2 Tesla) and being able to be magnetized in a molded condition.

However, rare-earth materials are very expensive and suffer under shortage of resources. Moreover, the materials are susceptible to corrosion in aqueous dilutions so that it is necessary to completely coat and mold the magnets for preventing corrosion. As another disadvantage of the rotor of EP 1 841 041 A1, it is required to overmold the rotor components two times, namely once for the cage or reflux base and once for the outside overmolding to mount the individual magnet elements. Another disadvantage of the rotor shown in this document is that the stop disc of the bearing has to be mounted together with an o-seal in an additional production step.

EP 1 533 883 A1 shows another BLDC motor for use in wet-running pumps, such as pumps for dishwashers, having a permanent magnet rotor which comprises a laminated ferromagnetic core, a rotor shaft made of amagnetic stainless steel and emerging from opposite ends of the core, and a container casing made from stainless steel in which the core is positioned and from which the drive shaft emerges. At least one curved magnetic element is provided between the core and the inner wall of the container casing. The core comprises deformable radial projections arranged to act on the opposing lateral ends of the at least one magnetic element so as to urge it radially towards the inner wall of the container casing. The at least one magnetic element is made from anisotropic ferrites, which is a cost-efficient material, wherein the magnetic element can be manufactured in a cost-effective sintering process to form anisotropic magnets.

However, anisotropic ferrites exhibit a relative low magnetic remanence (usually less than 0.5 Tesla), and magnetizing the core has to be performed in a sheathed condition with a magnetic gap to the magnetizing device resulting in a non-optimal utilization of material. Furthermore, the mounting process is laborious with respect to the core laminate for the magnetic reflux and with respect to sheathing and positioning of the magnet elements. This involves a lot of component parts, a stainless steel sheath (obtained by drawing) and seal elements.

Both conventional rotors described above are comprising a steel shaft which penetrates the outer sheath and the rotor. Usage of steel for the shaft represents a tradeoff between high hardness, abrasive wear and corrosion resistance in brine, so that the material characteristics of the rotor shaft are not optimal. This leads to wear of the rotor shaft resulting in slackness and acoustic emissions. Furthermore, the whole construction of these rotors in connection with the used materials results in magnetic and mechanic imbalances because of unavoidable tolerances during manufacturing. Thus, also the induction distribution is not ideal and deviates from a sinus shape resulting in increased torque variations and further acoustic emissions.

EP 0 438 334 A1 discloses a method of producing a centrifuge pump with paddle wheel and with electrical motor with rotor with permanent magnet, characterised in that it comprises at least the following phases: - a choice of a permanent magnet having a tubular form, and - the moulding of a mouldable or injectable mechanically rigid material over this tubular permanent magnet and following the axis of rotation of the latter to produce a monobloc composite component comprising a rotor with permanent magnet, a shaft of this rotor having at a first end, a first rotor bearing area and at a second end, a second rotor bearing area, and means of holding and driving the paddle wheel.

DE 20 2011 100 921 U1 discloses an electric motor, in particular an external rotor motor for driving a fan, with a stator, with a rotor and with a sliding bearing for a shaft of the rotor, wherein the sliding bearing has at least one bearing element formed from a polymer and having at least one sliding face, which is paired with the capacity for relative movement with an opposing sliding face. In order to make it possible for the electric motor to fulfil a high running power, in particular a running power of more than 25,000 operating hours required in the case of fans, with a production procedure involving little technological complexity and with very low maintenance requirements for the bearing arrangement, what is proposed is that at least the material of the sliding face or the material of the opposing sliding face is a polymer which consists completely or partially of a high-performance thermoplastic polymer filled with a solid lubricant or of a duroplastic formed from phenolic resin and filled with a solid lubricant.

EP 1 719 916 A1 discloses a pump unit having an electrical driving motor, which has a rotor such as a permanent magnet rotor. The rotor extends axially and is made from a magnetizable material. The magnetic poles of the rotor are of magnetizable material. The entire rotor is made from a one piece magnetizable material. The magnetizable material forms a bearing space for the rotor in a radial and or axial direction.

It is an object of the invention to provide an improved rotor unit which is easier to produce and eliminates the above mentioned disadvantages of prior art. It is another object of the invention to provide a BLDC motor comprising such a rotor unit for use in home appliances, for example.

### Summary of the Invention

The object is solved according to the invention by a rotor for a BLDC motor as set forth in independent claim 1. Further developed embodiments of the invention are provided as set forth in the dependent claims.

According to a first aspect of the invention, in a first embodiment a rotor unit for a brushless direct current motor is provided as defined in claim 1, comprising a main body having a substantially cylindrical portion integrally formed with a rotor shaft, wherein the rotor shaft of the main body comprises first and second bearing portions, and an annular magnet mounted on the outer circumference of the cylindrical portion of the main body. The rotor unit further comprises first and second bearing sleeves providing two cylindrical sliding surfaces and being respectively attached to the first and second bearing portions, and wherein one of the first and second bearing sleeves comprises a collar protruding radially from the cylindrical portion of the bearing sleeve and being arranged to bear axial forces. Thus, a separate steel rotor shaft may be omitted, facilitating manufacturing of the BLDC motor and reducing weight and torque inertia of the motor. The BLDC motor having that novel rotor unit is easy to manufacture and is a cost-efficient device in particular for use in a wet-running pump mounted in home appliances, for example. However, other applications are feasible such as immerged pumps in industrial processes for pumping corrosive fluids.

Preferred embodiments are defined in dependent claims 2 to 6 as well as in claims 7 to 10 referring to a brushless direct current motor and in claim 11 referring to a wet-running pump.

In the invention, the annular magnet is in positive locking engagement with the main body. Alternatively, the magnet may be fixed to the main body by bonding or force-locking techniques such as pressing.

### Brief Description of the Drawings

In the following, further advantages and embodiments of the inventive apparatus are described in conjunction with the attached drawings. Thereby, the expressions left, right, below and above are referred to the drawings in an orientation of the drawings which allows the normal reading of the reference numbers, but do not necessarily define a position or orientation of the features or components with respect to manufacturing or operation, unless explicitly stated.
Fig. 1 is a perspective sectional view of a BLDC motor comprising a rotor unit according to a first embodiment of the invention.
Fig. 2 is a perspective sectional view of a BLDC motor comprising a rotor unit according to a second embodiment of the invention.
Fig. 3 is a front view of the annular magnet showing the lateral magnetization of the annular magnet of the rotor unit according to the invention.

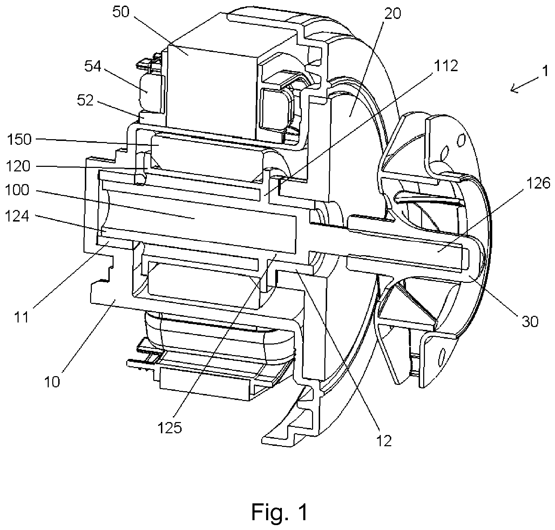

With respect to Fig. 1, a pump comprising a BLDC motor 1 having a rotor unit will be described in the following.

Fig. 1 shows a pump having a blade wheel 30 mounted on an output shaft portion 126 of a BLDC motor 1. The electric BLDC motor 1 comprises a motor casing 10 preferably made of a plastic material such as glass fiber reinforced polypropylene (GR-PP) and defining a rotor chamber having a recess and an aperture for receiving a rotor unit. A stator mounted on the outer circumference of the rotor chamber of the motor casing 10 comprises, for example, a yoke assembly consisting of a laminated ferromagnetic yoke 50, at least one bobbin 52 and a plurality of coils 54 providing a plurality of stator poles. Electric power supply to a plurality of windings distributed over the coils 54 is commutated for generating a rotating magnetic field in a usual manner (for example by electronic commutation).

A first bearing seat 11 is provided at the bottom (opposite to the aperture) of the rotor chamber. A casing plate 20 is mounted at the aperture of the rotor chamber for covering the same. The casing plate has a center hole receiving a second bearing seat 12 which, in cooperation with the first bearing seat 11, rotationally supports by slide bearing the rotor unit arranged in the rotor chamber. The bearing seats 11, 12 preferably comprise a carbon material having good lubricating characteristics and a long service life. Alternatively, the bearing seats may comprise a wear resistant material containing graphite.

The rotor unit of the first embodiment shown in Fig. 1 comprises a main body 100 and an annular magnet 150. The main body 100 comprises a substantially cylindrical portion 120 integrally formed with a rotor shaft having first and second rotor shaft portions 124, 125, 126. The main body 100 preferably comprises a thermoplastic or a thermosetting non-magnetic material, preferably glass fiber reinforced plastics (GRP) such as glass fiber reinforced polypropylene (GR-PP). As is further shown in Fig. 1, the main body 100 may comprise two coaxially arranged cylindrical portions having different diameters. The portion having the smaller diameter represents the rotor shaft, while the other cylindrical portion 120 having the larger diameter serves to receive on its outer circumference the annular magnet 150. Preferably, the cylindrical portions of the main body 100 are integrally formed (by injection molding, for example) and connected to each other via a front plate 112 at an axial end of the same and/or via a plurality of longitudinal webs extending between the two cylindrical portions in axial direction. The main body 100 may be formed as a massive body, too. The main body 100 may be injection molded within the pre-manufactured annular magnet 150 using the annular magnet 150 as a part of the injection mold. In this manner, a so called composite shaft is formed comprising a rotor shaft and a cylindrical portion receiving an annular magnet.

Furthermore, the rotor shaft portions 124, 125, 126 comprise bearing portions 124, 125 providing two cylindrical bearing surfaces or sliding surfaces, respectively. The first and second bearing portions 124, 125 of the main body 100 are supported in the respective first and second bearing seats 11, 12 as shown in Fig. 1. For achieving good operating characteristics and a long service life, the main body 100 may be formed as a component comprising a functional plastic material, preferably an abrasive wear resistant functional plastic material such as thermoplastic or a thermosetting non-magnetic material, preferably glass fiber reinforced plastics (GRP) such as glass fiber reinforced polypropylene (GR-PP) or the like. The first and second bearing seats 11, 12 may comprise another functional material such as highly filled and reinforced thermoplastic materials or bulk mould compounds (BMC). For example, a preferred compound material may comprise at least one of polyphtalamide, aramide fibers, polytetrafluorethylene and graphite as a lubricating component. Thus, the bearing seats are self-lubricating. It has to be noted that the bearing seats 11, 12 may alternatively comprise a carbon material or other materials containing graphite, as mentioned above. In this manner, a very simple construction is achieved comprising less components and exhibiting excellent characteristics. In particular, the components of the rotor unit are resistant to abrasive materials in the fluid to be pumped, resistant to cleaning agents and brines, and comply with migration limits for drinking water contact.

Furthermore, the base of the blade wheel 30 may be integrally formed with the protruding output shaft portion 126 of the main body 100. Moreover, as shown in Fig. 1, the second bearing seat 12 may have a collar which, in cooperation with an annular surface 112 of the main body 100 or of the cylindrical portion 120 of the main body 100 adjacent to one of the bearing portions 125, is configured to bear axial forces generated by the blade wheel 30. Thus, a separate stop disc is not necessary.

In a further development the base of the blade wheel 30 may be formed integrally with an elongated protruding end 126 of the rotor shaft portion 125. Thus, a very simple and cost-effective manufacturing process, such as injection molding, can be used to manufacture the main body 100 in a structural unit with the rotor shaft. The cylindrical portion 120 carries the annular magnet 150.

With the first embodiment as described above, advantageous effects can be achieved. In particular, the number of components and the number of manufacturing steps are decreased and manufacturing is simplified. Moreover, machining of a separate rotor shaft, made of steel for example, can be eliminated, and furthermore, the weight and the rotary inertia of BLDC motor 1 are decreased.

Preferably, the annular magnet 150 is formed as one piece, preferably from an anisotropic hard ferrite such as strontium ferrite which is suitable for contact with tap water and has a relative high corrosion resistance. Also other permanent magnetic materials having a good corrosion resistance are suitable. Such anisotropic annular magnets can be manufactured in a very simple and cost-efficient manner, for example by a sintering process. Machining of the inner surface of the annular magnet 150 is not required. Furthermore, because of the high corrosion resistance of the used permanent magnetic material, no rotor sheath or casing covering the magnetic material is required, even if the rotor is floating in the fluid to be pumped, so that a rotor sheath may be omitted and the magnetic gap of the BLDC motor 1 between the annular magnet 150 of the rotor and the yoke 50 of the stator may be advantageously reduced. Another advantage is that the annular magnet 150 may be magnetized before or after assembling of the rotor unit and without any sheath covering the magnet, i.e. in direct contact with a magnetizing device. This results in an optimal utilization of the material.

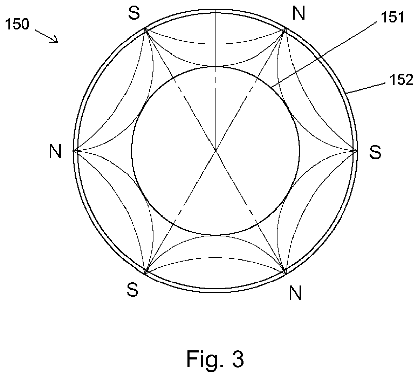

In the depicted exemplary configuration of a BLDC motor configured for applications with a typical power range of 70 to 100 W, the annular magnet 150 may be magnetized to have six alternating magnetic poles N and S, while the yoke assembly correspondingly comprises nine teeth (poles). Other numbers and ratios of poles may be used, too. The poles of the annular magnet 150 preferably are laterally polarized on the outer circumference 152 as is shown in Fig. 3. Other configurations are feasible, too, for example with higher or lower power or other dimensional proportions as depicted in the drawings. In a preferred further development of the invention, the wall thickness and the magnetization of the annular magnet 150 may be coordinated in such a manner that an emission of the magnetic field at the back side 151 facing away from the stator (i.e. at the inner cylindrical surface 151 of the annular magnet 150) is minimized so that a core laminate improving the magnetic circuit may be omitted. Thus, the construction of the rotor unit is simplified and the rotor is reduced in size and weight. The wall thickness of the annular magnet preferably may be in the range of 3 to 10 mm, more preferably in the range of 5 to 7 mm.

In particular, this embodiment is advantageous in that the magnetic flux distribution, and thus the induction distribution along the rotary angle in a BLDC motor 1 according to this embodiment is very regular and close to an ideal sinus shape. Therefore, acoustic emissions and torque variations are reduced to very low levels.

Furthermore, also mechanical imbalances may be minimized because the outer surface of the rotor unit (the outer surface of the annular magnet 150) may be smoothed, while the balancing may be performed at the main body 100.

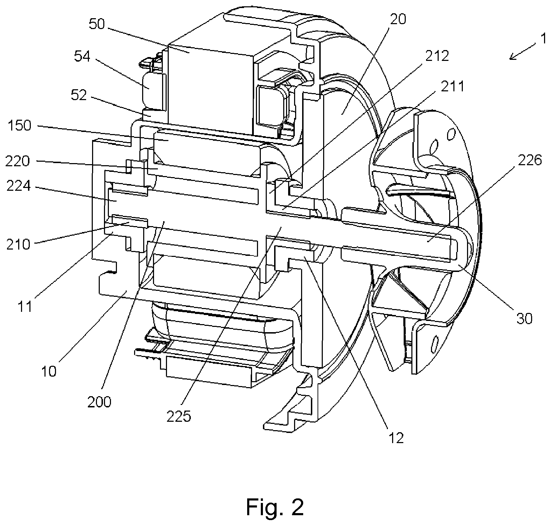

With respect to Fig. 2, a pump similar to that shown in Fig. 1, but comprising a BLDC motor 1 with a rotor unit according to the invention will be described in the following. Components which are identical or very similar to that of the first embodiment are designated with the same reference numbers while a detailed description of the same is omitted.

The second embodiment shown in Fig. 2 comprises a rotor unit having a main body 200 which is integrally formed with a substantially cylindrical portion 220 and two rotor shaft portions 224, 225, 226, similar to the first embodiment shown in Fig. 1. The main body 200 may be formed as one component, preferably made of a functional plastic material.

The rotor shaft portions protrude from both sides of the cylindrical portion 220 and comprise first and second bearing portions 224, 225. The first bearing portion 224 of the main body 200 protruding to the bottom side of the motor casing 10 is provided with a fixedly attached first bearing sleeve 210. The second bearing portion 225 of the main body 200 protruding to the blade wheel side of the motor casing 10 is provided with a fixedly attached second bearing sleeve 211. The first and the second bearing sleeves 210, 211 preferably comprise ceramic materials or glass fiber reinforced plastics. Suitable ceramic materials are oxide ceramics or nitrides, for example. Suitable glass fiber reinforced plastics are polypropylene (PP) or polybutylene terephthalate (PBT), for example. The bearing sleeves 210, 211 are fixedly attached or integrated to the bearing portions 224, 225 of the main body 200 of the rotor unit. This connection is provided by a positive locking engagement or by injection molding or overmolding, i.e. molding the plastic material of the main body 200 around the pre-manufactured bearing sleeves 210, 211. In this manner, a composite shaft is formed in which the bearing surfaces or sliding surfaces, which are supported in corresponding bearing seats 11, 12 arranged at the motor casing 10 and the casing plate 20, are provided in the form of integrated ceramic components 210, 211.

The second bearing sleeve 211 has a collar 212 serving as an integrated stop disc portion protruding radially from the cylindrical sleeve portion of the bearing sleeve 211 as shown in Fig. 2. This collar 212 may abut on a front plate of the main body 220 and restrict axial movement of the rotor unit 200 in cooperation with a corresponding collar portion of the second bearing seat 12 received in the center hole of the casing plate 20, in order to bear axial forces generated by the blade wheel 30. Thus, a separate stop disc may be omitted.

In a further development of the second embodiment, the base of the blade wheel 30 may be formed integrally with an elongated protruding end (output shaft portion) 226 of the rotor shaft portion 225.

With the second embodiment as described above, the advantageous effects of the first embodiment as mentioned above may be achieved and even further improved. In particular, the combination of bearing materials, i.e. the ceramic material of the bearing sleeves 210, 211 and the carbon material of the bearing seats 11, 12, provide for very good operating characteristics and a long service life of the BLDC motor 1.

## Claims

1. Rotor unit for a brushless direct current motor (1), in particular for use in a wet-running pump, comprising:
a main body (200) having a substantially cylindrical portion (220) integrally formed with a rotor shaft (224, 225, 226),
wherein the rotor shaft of the main body (200) comprises first and second bearing portions (224, 225);
an annular magnet (150) mounted on the outer circumference of the cylindrical portion (220) of the main body (200);
**characterized in that**
the rotor unit further comprises first and second bearing sleeves (210, 211) providing two cylindrical sliding surfaces and being respectively attached to the first and second bearing portions (224, 225); and
one of the first and second bearing sleeves (211) comprises a collar (212) protruding radially from the cylindrical portion of the bearing sleeve (211) and being arranged to bear axial forces.

2. Rotor unit according to claim 1,
wherein the main body (200) comprises a glass fiber reinforced (GFR) plastic material.

3. Rotor unit according to one of the preceding claims,
wherein the main body (200) comprises a functional plastic material, preferably an abrasive wear resistant plastic material.

4. Rotor unit according to claim 1,
wherein the first and second bearing sleeves (210, 211) comprise a ceramic material, preferably oxide ceramics or nitrides, or comprise glass fiber reinforced plastics, preferably polypropylene or polybutylene terephthalate.

5. Rotor unit according to one of the preceding claims,
wherein the annular magnet (150) is magnetized to have a plurality of laterally polarized alternating magnetic poles.

6. Rotor unit according to claim 5,
wherein the annular magnet (150) has a wall thickness and a magnetization coordinated to each other in such a manner that an emission of the magnetic field at an inner cylindrical surface (151) of the annular magnet (150) is minimized.

7. Brushless direct current motor (1) comprising a rotor unit according to one of the preceding claims, and further comprising
a motor casing (10) defining a rotor chamber receiving the rotor unit, wherein the motor casing (10) has a central reception portion receiving a first bearing seat (11) supporting the first bearing portion (224) of the main body (200), and
a casing plate (20) mounted to the motor casing (10) so as to cover an aperture of the rotor chamber, wherein the casing plate (20) has a center hole receiving a second bearing seat (12) supporting the second bearing portion (225) of the main body (200).

8. Brushless direct current motor (1) according to claim 7,
wherein the first and the second bearing seats (11, 12) comprise a carbon material or a material containing graphite.

9. Brushless direct current motor (1) according to claim 7 or 8,
wherein the first and second bearing seats (11, 12) comprise a self-lubricating functional material, preferably a bulk mould compound, more preferably a compound comprising at least one of polyphtalamide, aramide fibers, polytetrafluorethylene and graphite.

10. Brushless direct current motor (1) according to one of the claims 7 to 9,
wherein one of the first and second bearing seats (11, 12) comprises a collar portion arranged to bear axial forces and to restrict an axial movement of the main body (200) of the rotor unit.

11. Wet-running pump, in particular for use in home appliances, comprising a brushless direct current motor (1) according to one of the claims 7 to 10.

## Patentansprüche

1. Rotoreinheit für einen bürstenlosen Gleichstrommotor (1), insbesondere zur Verwendung in einer Nassläuferpumpe, umfassend:
einen Grundkörper (200) mit einem im Wesentlichen zylindrischen Abschnitt (220), der einstückig mit einer Rotorwelle (224, 225, 226) ausgebildet ist,
wobei die Rotorwelle des Grundkörpers (200) einen ersten und einen zweiten Lagerabschnitt (224, 225) umfasst;
einen Ringmagneten (150), der an dem Außenumfang des zylindrischen Abschnitts (220) des Grundkörpers (200) montiert ist;
**dadurch gekennzeichnet, dass**
die Rotoreinheit ferner eine erste und eine zweite Lagerbuchse (210, 211) umfasst, die zwei zylindrische Gleitflächen bereitstellen und jeweils an dem ersten bzw. dem zweiten Lagerabschnitt (224, 225) angebracht sind; und
eine von der ersten und der zweiten Lagerbuchse (211) einen Kragen (212) umfasst, welcher von dem zylindrischen Abschnitt der Lagerbuchse (211) radial vorsteht und so angeordnet ist, dass er Axialkräfte aufnimmt.

2. Rotoreinheit nach Anspruch 1,
wobei der Grundkörper (200) ein glasfaserverstärktes Kunststoffmaterial (GFR-Material) umfasst.

3. Rotoreinheit nach einem der vorhergehenden Ansprüche,
wobei der Grundkörper (200) ein Funktionskunststoffmaterial, vorzugsweise ein reibverschleißfestes Kunststoffmaterial umfasst.

4. Rotoreinheit nach Anspruch 1,
wobei die erste und die zweite Lagerbuchse (210, 211) ein Keramikmaterial, vorzugsweise Oxidkeramiken oder Nitride, umfassen oder glasfaserverstärkt Kunststoffe, vorzugsweise Polypropylen oder Polybutylenterephthalat, umfassen.

5. Rotoreinheit nach einem der vorhergehenden Ansprüche,
wobei der Ringmagnet (150) derart magnetisiert ist, dass er eine Mehrzahl von lateral polarisierten, abwechselnden Magnetpolen aufweist.

6. Rotoreinheit nach Anspruch 5,
wobei der Ringmagnet (150) eine Wandstärke und eine Magnetisierung aufweist, die so aufeinander abgestimmt sind, dass eine Emission des Magnetfeldes an einer Zylinderinnenfläche (151) des Ringmagneten (150) minimiert ist.

7. Bürstenloser Gleichstrommotor (1) umfassend eine Rotoreinheit nach einem der vorhergehenden Ansprüche und ferner umfassend
ein Motorgehäuse (10), das eine Rotorkammer definiert, welche die Rotoreinheit aufnimmt, wobei das Motorgehäuse (10) einen mittigen Aufnahmeabschnitt aufweist, der einen ersten Lagersitz (11) aufnimmt, welcherden ersten Lagerabschnitt (224) des Grundkörpers (200) abstützt, und
eine Gehäuseplatte (20), die derart an dem Motorgehäuse (10) montiert ist, dass sie eine Durchbrechung der Rotorkammer abdeckt, wobei die Gehäuseplatte (20) ein Mittelloch aufweist, das einen zweiten Lagersitz (12) aufnimmt, welcher den zweiten Lagerabschnitt (225) des Grundkörpers (200) abstützt.

8. Bürstenloser Gleichstrommotor (1) nach Anspruch 7,
wobei der erste und der zweite Lagersitz (11, 12) ein Kohlenstoffmaterial oder ein graphithaltiges Material umfassen.

9. Bürstenloser Gleichstrommotor (1) nach Anspruch 7 oder 8,
wobei der erste und der zweite Lagersitz (11, 12) ein selbstschmierendes Funktionsmaterial, vorzugsweise eine BMC-Formmasse (bulk moulding compound), mehr bevorzugt eine Masse umfassend Polyphthalamid und/oder Aramidfasern und/oder Polytetrafluorethylen und/oder Graphit umfassen.

10. Bürstenloser Gleichstrommotor (1) nach einem der Ansprüche 7 bis 9,
wobei einer von dem ersten und dem zweiten Lagersitz (11, 12) einen Kragenabschnitt umfasst, der so angeordnet ist, dass er Axialkräfte aufnimmt und eine Axialbewegung des Grundkörpers (200) der Rotoreinheit begrenzt.

11. Nassläuferpumpe, insbesondere zur Verwendung in Haushaltsgeräten, umfassend einen bürstenlosen Gleichstrommotor (1) nach einem der Ansprüche 7 bis 10.

## Revendications

1. Unité rotorique pour un moteur à courant continu sans balais (1), en particulier destinée à être utilisée dans une pompe à rotor noyé, ladite unité comprenant :
un corps de base (200) pourvu d'une partie (220) essentiellement cylindrique qui est formée en une seule pièce avec un arbre de rotor (224, 225, 226),
l'arbre de rotor dudit corps de base (200) présentant une première et une deuxième partie de palier (224, 225) ;
un aimant annulaire (150) qui est monté sur la circonférence extérieure de la partie cylindrique (220) du corps de base (200) ;
**caractérisée en ce que**
l'unité rotorique comprend en outre une première et une deuxième douille de palier (210, 211) qui fournissent deux surfaces de glissement cylindriques et qui sont respectivement montées sur la première et la deuxième partie de palier (224, 225) ; et
l'une desdites première et deuxième douilles de palier (211) comprend une collerette (212) qui fait saillie de manière radiale par rapport à la partie cylindrique de la douille de palier (211) et qui est disposée de manière à recevoir des forces axiales.

2. Unité rotorique selon la revendication 1,
dans laquelle le corps de base (200) comprend une matière plastique renforcée à la fibre de verre (matière RFV).

3. Unité rotorique selon l'une quelconque des revendications précédentes,
dans laquelle le corps de base (200) comprend une matière plastique fonctionnelle, de préférence une matière plastique résistant à l'usure par frottement.

4. Unité rotorique selon la revendication 1,
dans laquelle la première et la deuxième douille de palier (210, 211) comprennent une matière céramique, de préférence des céramiques d'oxyde ou des nitrures, ou comprennent des plastiques renforcés à la fibre de verre, de préférence du polypropylène ou du polytéréphtalate de butylène.

5. Unité rotorique selon l'une quelconque des revendications précédentes,
dans laquelle l'aimant annulaire (150) est aimanté de manière à présenter une pluralité de pôles magnétiques alternés à aimantation latérale.

6. Unité rotorique selon la revendication 5,
dans laquelle l'aimant annulaire (150) présente une épaisseur de paroi et une aimantation qui sont adaptées l'une à l'autre de manière à minimiser une émission du champ magnétique sur une surface intérieure de cylindre (151) de l'aimant annulaire (150).

7. Moteur à courant continu sans balais (1) comprenant une unité rotorique selon l'une quelconque des revendications précédentes et comprenant en outre
un carter de moteur (10) qui définit une chambre de rotor qui reçoit l'unité rotorique, le carter de moteur (10) présentant une partie de réception centrale laquelle reçoit un premier siège de palier (11) qui soutient la première partie de palier (224) du corps de base (200), et
une plaque de carter (20) qui est montée sur le carter de moteur (10) de manière à recouvrir une perforation de la chambre de rotor, la plaque de carter (20) présentant un trou central lequel reçoit un deuxième siège de palier (12) qui soutient la deuxième partie de palier (225) du corps de base (200).

8. Moteur à courant continu sans balais (1) selon la revendication 7,
dans lequel le premier et le deuxième siège de palier (11, 12) comprennent une matière carbonée ou une matière graphiteuse.

9. Moteur à courant continu sans balais (1) selon la revendication 7 ou 8,
dans lequel le premier et le deuxième siège de palier (11, 12) comprennent une matière fonctionnelle autolubrifiante, de préférence un mélange à mouler BMC (bulk moulding compound), de manière privilégiée un mélange comprenant du polyphtalamide et/ou des fibres aramides et/ou du polytétrafluoréthylène et/ou du graphite.

10. Moteur à courant continu sans balais (1) selon l'une quelconque des revendications 7 à 9,
dans lequel l'un desdits premier et deuxième sièges de palier (11, 12) comprend une partie collerette qui est disposée de manière à recevoir des forces axiales et à limiter un déplacement axial du corps de base (200) de l'unité rotorique.

11. Pompe à rotor noyé, en particulier destinée à être utilisée dans des appareils ménagers, comprenant un moteur à courant continu sans balais (1) selon l'une quelconque des revendications 7 à 10.
